Europäisches Patentamt

European Patent Office

Office européen des brevets

(11) Veröffentlichungsnummer: **0 270 876**

**A2**

(12) # EUROPÄISCHE PATENTANMELDUNG

(21) Anmeldenummer: **87116836.5**

(22) Anmeldetag: **14.11.87**

(51) Int. Cl.4: **H01J 1/30**

(30) Priorität: **15.12.86 DE 3642749**

(43) Veröffentlichungstag der Anmeldung:
**15.06.88 Patentblatt 88/24**

(84) Benannte Vertragsstaaten:
**CH DE FR GB IT LI SE**

(71) Anmelder: **ELTRO GmbH Gesellschaft für Strahlungstechnik**
**Kurpfalzring 106 Postfach 10 21 20**
**D-6900 Heidelberg 1(DE)**

Anmelder: **DOCUCO KG**
**Im Aitgefäll 12**
**D-7530 Pforzheim(DE)**

(72) Erfinder: **Frey, Peter, Dr. rer. nat.**
**Küferstrasse 62**
**D-4156 Wilich 1(DE)**
Erfinder: **Klink, Norbert, Dipl.-Ing.**
**Landsberger Strasse 10**
**D-7530 Pforzheim(DE)**
Erfinder: **Prein, Franz, Dipl.-Phys.**
**Tulpenweg 3**
**D-6903 Neckargemünd(DE)**
Erfinder: **Wiegand, Jürgen, Dipl.-Ing.**
**Boschstrasse 17**
**D-6904 Eppelheim(DE)**

(74) Vertreter: **Muschka, Wilhelm, Dipl.-Ing.**
**Eltro GmbH Gesellschaft für**
**Strahlungstechnik Kurpfalzring 106 Postfach**
**10 21 20**
**D-6900 Heidelberg 1(DE)**

(54) **Oberflächen für elektrische Entladungen.**

(57) Bei einer Oberfläche für elektrische Entladungen, insbesondere innerhalb von Gasen, wird außer einer gleichmäßgen Verteilung der Feldverstärkungsfaktoren eine Steigerung der Photonen- und/oder der Elektronendichte bei der Entladung angestrebt. Dies erreicht man im wesentlichen dadurch, daß man eine Mkrostruktur (1) verwendet, die sich aus mindestens zwei Materialien (2, 3 und 4) unterschiedlicher physikalischer Eigenschaften zusammensetzt und die außerdem auch noch eine die Elektronenemission erhöhende geometrische Form besitzt (Fig. 1).

Fig. 1

TRO GMBH GESELLSCHAFT FÜR STRAHLUNGSTECHNIK
Kurpfalzring 106, 6900 Heidelberg 1


DODUCO KG, Dr. E. Dürrwächter, Im Altgefäll 12, 7530 Pforzheim

Ma/Kr/574

Beschreibung


## Oberflächen für elektrische Entladungen


Die Erfindung bezieht sich auf Oberflächen für elektrische Entladungen, insbesondere innerhalb von Gasen.


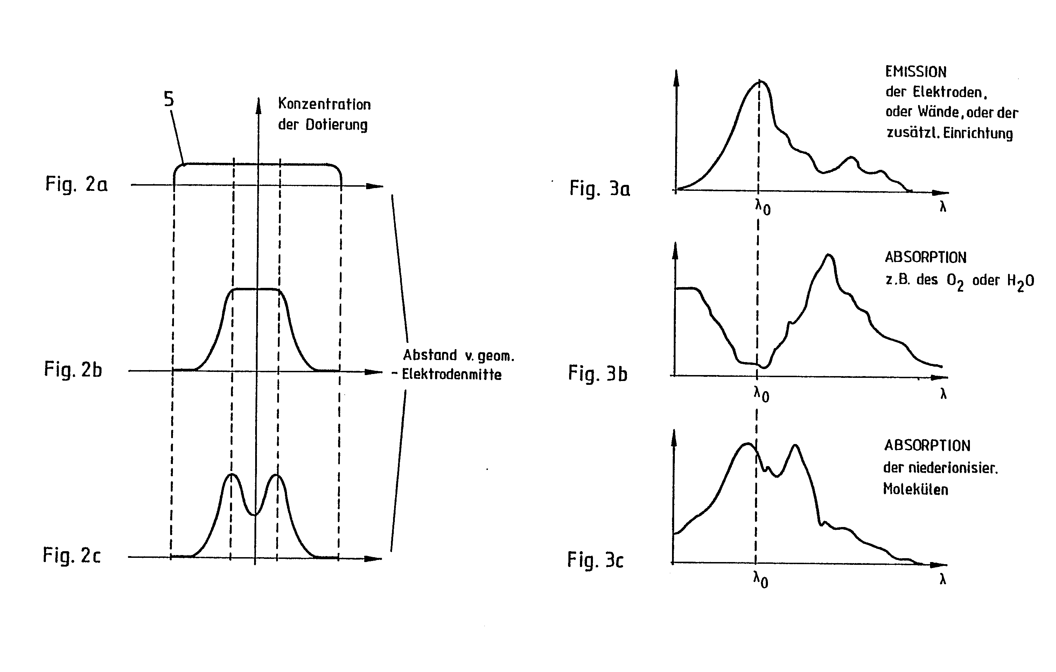

Der Aufsatz "Surface damage on stainless steel and molybdenum electrodes caused by electrical breakdown in high vacuum" von M.K. Sinha, Yee-Gee Ku und Randall P. Johnson in J. Appl. Phys. 52 (2), Februar 1981, Seiten 699-705, zeigt und beschreibt die Art, wie sich reine Metallelektroden, z.B. aus Stahl oder Molybdän, beim Schalten im Hochvakuum verhalten. Wie etwa Fig. 2 veranschaulicht, führt hierbei eine Bläschenbildung zum Aufreißen und damit zu einem Zerstören der Oberflächen. Die DE-OS 32 24 644 behandelt eine aus drei Metallkarbid-Schichten, wie z.B. Tantal oder Niob, aufgebaute Kathode für Gaslaser und Verfahren zu deren Herstellung.


In der DE-PS 31 48 570 oder der EP-A 0 081 081 wird durch Beimischung niederionisierender Moleküle zum Gas eine Verbesserung der Entladeeigenschaften bei mit Katalysatoren arbeitenden Gaslasern erzielt.


In "Elektrische Kontake und ihre Werkstoffe", Springer Verlag Berlin Heidelberg New York Tokyo, 1984, S. 48 f., wird der Elektronenaustritt aus Metallen aufgrund der Feld- und Thermoemission behandelt; in diesem Zusammenhang wird u.a. erläutert, daß in metallischen Festkörpern Elektronen frei beweglich sind, was sich nach der sogenannten Fermistatistik durch unvollständig besetzte Energiebänder erklären läßt. Ferner ist von S. 171 ff. die galvanische Erzeugung von Kontaktwerkstoffen der Energietechnik, von S. 185 ff. die sintertechnische Erzeugung von Verbundwerkstoffen und von S. 279 ff. das Aufbringen von Werkstoffen auf eine Träger-

schicht durch Plattieren bekannt. Der pulvermetallurgische Weg wird gewählt, wenn heterogene Werkstoffe aus zwei oder mehr Komponenten wegen ihrer völligen oder auch nur geringen Löslichkeit im festen wie im flüssigen Zustand schmelzmetallurgisch nicht miteinander verbunden werden können.

Diese auf dem Weg des Ionenplattierens der CVD-, LCVD- oder PVD-Beschichtung (mit C für chemical, V für vaccuum, D für deposition, L für laser und P für physical) hergestellten Kontaktwerkstoffe finden - wie übrigens auch diejenigen der Nachrichtentechnik - in der Entladungsphysik bisher keine Anwendung, weil sich die physikalischen Prozesse nur bedingt vergleichen lassen. Die Lichtbogen-Zeitkonstanten liegen in letzterem Fall um 10 ms und die Stromdichten um $10^6$ A / $cm^2$. Sie unterscheiden sich mithin um Zehnerpotenzen gegenüber den entsprechenden Werten in der Entladungsphysik, wo die Funkenzeiten im Nanosekundenbereich und die Stromdichtewerte um $10^2$ A / $cm^2$ liegen.

In Gaslasern, wie z.B. Excimer- oder $CO_2$-Lasern, sowie Laserverstärkern und Schaltern, wie z.B. Funkenschaltern, mit Triggerung und entladungstechnisch kritischen Gasmischungen, das heißt z.B. hohen $CO_2$- oder $O_2$-Anteilen, sowie vor allem mit höheren Gasdrücken, schnellen Katalysatoren und großen Leistungsdichten bei hoher Energiezufuhr und Pulsfolge sind die Anforderungen in Bezug auf die elektrische Entladung besonders hoch. Während die Zeitfolge für Vorionisation und Hauptentladung im wesentlichen durch Pulsfolge, -form und -spitzenleistung beeinflußt wird, ist es vor allem der Entladungsvorgang als solcher, der Lasermode, Lebensdauer und Reproduzierbarkeit beeinflußt.

Aufgabe der Erfindung ist es, gattungsgemäße Oberflächen so zu verbessern, daß außer einer gleichmäßigen Verteilung der Feldverstärkungsfaktoren eine Verringerung der Funkenzeit (Lichtbogen-Zeitkonstante) sowie eine Steigerung der Photonen- und/oder der Elektronen- bzw. Stromdichte bei Vor- und Hauptentladung mit geringer Sputterrate und hoher Lebensdauer erreicht wird. Diese Aufgabe wird erfindungsgemäß durch die im Kennzeichen des Anspruchs 1 genannten Merkmale gelöst. Auf diese Weise gelingt es, die Elektronen-, Photonen- und Ionenerzeugung in diejenigen

- 3 -

Bezirke, in denen die Entladung abläuft, das heißt vor allem in den Kathoden- und/oder den Anodenraum, zu verlegen. Dadurch wiederum erhält man eine bestmögliche Nutzung zentraler Volumenbereiche. Im Detail werden homogenere Modenstrukturen sowie die Unterdrückung von Seitenmoden bei einem Laser sowie von Rand- und Wandeffekten (Teilentladung an Begrenzungen) insbesondere bei einem Funkenschalter (Spark-Gap) erzielt, wobei sich letztere jeweils besonders negativ hinsichtlich der Lebensdauer und Reproduzierbarkeit auswirken. Gleichzeitig werden auch die Sputterraten reduziert, wodurch vermieden wird, daß Absputterungen in Fußpunktnähe des Mikrovolumens in das Gasvolumen gelangen und dadurch z.B. die Laser- oder Schalterfunktion sowie die Lebensdauer eines Gerätes beeinträchtigen. Weitere Vorteile sind darin zu sehen, daß die Dissoziation der in den Gasraum gebrachten Moleküle (besonders z.B. $CO_2$, $N_2$, $C_n H_m$) minimiert wird. Ferner darin, daß die Stromkurve der Entladung steil und dadurch die Abhängigkeit der Entladung und des Pumpvorganges von Temperatur, Druck, Gaszusammensetzung und elektrischen Parametern verkleinert wird. Örtliche Aufheizungen, Schmelzflüsse und Kraterbildungen an den Oberflächen sind begrenzt, so daß die Mikrostruktur relativ stabil erhalten bleibt; dies hilft die in Betriebspausen durch Absorption aus dem Gasraum - mit negativen Folgen für die Reproduzierbarkeit - eintretende Oberflächenbelegung zu stabilisieren.

Je nach Anwendungsart der Oberflächen kann der Vorteil in der speziellen Auswahl der Materialien begründet sein.

Auch eine Ausbildung gemäß dem Merkmal des Anspruchs 4 ist mitunter von Vorteil. So können dadurch Materialien niederer Elektronen-Austrittsenergien mit einem Anteil von weniger als 20 Gewichtsprozenten in ein Gerüst z.B. aus Wolfram eingebettet werden, dessen Feinstruktur eine Felderhöhung bewirkt, aus der sich ebenfalls eine niedrige Austrittsenergie für Elektronen ergibt. Diese Materialien können fest, flüssig oder gasförmig sein.

In vorstehendem Zusammenhang ist sodann die Verwendung von Materialien gemäß den Ansprüchen 6 bis 8 vorteilhaft. Ganz allgemein läßt sich sagen,

- 4 -

daß sowohl die Vorionisation als auch der Hauptpuls von den auf der Oberfläche und im Gasvolumen ablaufenden Vorgängen abhängen. Einer Einflußnahme auf die Materialien, mittels derer die Entladungsvorgänge und eine Optimierung der Entladungsspektren möglich ist, kommt daher besondere Bedeutung zu. Mit Hilfe von optischen (Spektral-) Filtern, z.B. Schichten auf Oberflächen, kann diese Optimierung noch zusätzlich verbessert werden. Das bei den Entladungen auftretende Emissionsspektrum ist unter anderem von den verwendeten Materialien der Oberfläche, aber auch von den an der Oberfläche anlagernden oder in Oberflächennähe befindlichen Molekülen abhängig. Intensität und Wellenlänge des Emissionsspektrums lassen sich durch Auswahl der Materialien und Moleküle beeinflussen. Diese können zur Verbesserung der Entladungseigenschaften in die Oberfläche als Speicher eingelagert werden. Bei entsprechender Auswahl der Porengrößen ist damit Langzeitspeicherung möglich, die bei Bedarf auch noch steuerbar ist. Bei Verwendung einer oxidischen Verbindung, z.B. von $Ba\ O_2$, erübrigt sich außerdem ein langer Burn-in-Prozeß zum Stabilisieren einer Oberfläche, wie sie z.B. bei $CO_2$-Lasern zur Anwendung gelangen.

Um insbesondere bei höheren Gasdrücken und damit geringen Reichweiten der Photonen homogen und schnell entladen (schalten) zu können, ist es vorteilhaft, die niederionisierenden Moleküle des Gasraumes in oder an die Oberflächen der Elektroden bzw. Wände zu bringen. Dies kann im Sinne eines Festkörperspeichers in einer Elektrode oder Wand erfolgen, wobei die eingelagerten Moleküle gemäß Anspruch 10 dem Gasraum oder einer Vorbehandlung entstammen.

Weiterbildungen der Erfindung sind Gegenstand der restlichen Unteransprüche.

Im folgenden wird an Hand einer Zeichnung ein Ausführungsbeispiel der Erfindung näher erläutert. Es zeigt

Fig. 1 eine sich aus zwei Materialien unterschiedlicher Dotierung zusammensetzende Mikrostruktur,

Fig. 2 den unterschiedlichen, von der Dotierung abhängigen Intensitätsverlauf im Mittelbereich einer emittierenden Elektrode und

Fig. 3 den gegensätzlichen Kurvenverlauf eines Absorptionsspektrums und eines Spektrums mit störenden Beimischungen ($O_2$ oder $H_2O$).

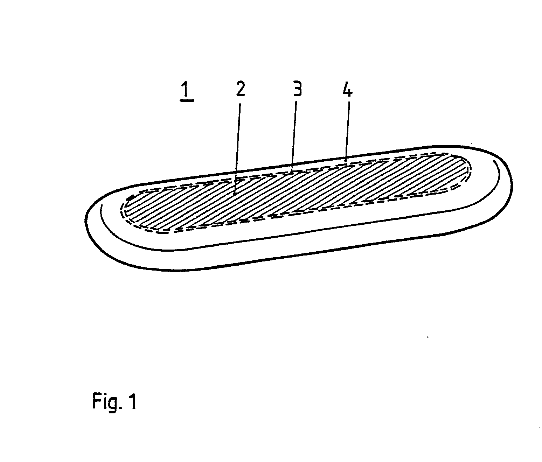

In Fig. 1 stellt der mit durchgehender Linienführung umrandete Bezirk einen Teil der Oberfläche 1 einer aus einer Mikrostruktur hergestellten Elektrode eines Gaslasers dar. Ebenso wäre es denkbar, daß es sich um eine beliebige Wandoberfläche handelt, die für eine Verbesserung von Initialbedingungen einer elektrischen Entladung vorgesehen ist.

Der schraffierte Innenbezirk 2 ist eine Zone homogener Dotierung fester, flüssiger oder gasförmiger Substanzen, während der sich nach außen hin anschließende, mit unterbrochenen Linien angedeutete, ringförmige Bezirk 3 eine Übergangszone mit variierender Dichte der Dotierung darstellt. Der freie äußere Bezirk 4 gehört der Mikrostruktur des Grundmaterials an, aus dem die Elektrode hergestellt ist und auf der die vorgenannten Dotierungen 2, 3 aufgebracht sind.

Solche Einlagerungen lassen sich z.B. dadurch bewirken, daß zunächst die Gitter der Elementarzellen durch Erwärmung aufgeweitet, in diese geweiteten "Poren" - gegebenenfalls unter Druck - Moleküle eingebracht werden und anschließend das Material durch Abkühlung wieder in seinen Ausgangszustand überführt wird. Die Gitterkonstante nimmt bei dem Abkühlungsvorgang linear ab, so daß die eingebrachten Moleküle durch die abkühlungsbedingte Kontraktion des Trägermaterials gewissermaßen einen maßgeschneiderten Paßsitz erhalten.

Im vorliegenden Ausführungsbeispiel ist es so, daß sich die dargestellte Oberfläche aus den beiden Materialien 2, 3 und 4 zusammensetzt, wobei die beiden Bezugszahlen 2 und 3 lediglich für eine unterschiedliche Dichte ein und desselben Materials stehen. Bei einem anderen, nicht dargestellten Ausführungsbeispiel ist es selbstverständlich auch möglich, daß das Grundmaterial 4 mit mehreren Materialien derselben Dichte oder unterschiedlicher Dichte dotiert ist. Es kann hierbei auch wieder so sein, daß ein Material oder mehrere Materialien unter sich hinsichtlich der Dichte variieren.

Die mikrostrukturierten Grundsubstanzen 2, 3 und 4 können aus Metallen, z.B. Ni, Cu, Ti, Edelmetallen, pulvermetallurgisch hergestelltem - z.B. gesintertem - Wolfram oder Molybdän oder auch aus einer Kombination dieser Substanzen bestehen. Für den Aufbau von Wänden können neben Isolatoren auch Halbleiter verwendet werden. Von Vorteil ist hierbei eine leichtere Optimierung der Emissionsspektren zu den durch die Gasmischung festzulegenden Absorptionsspektren und ein geringerer Verlust an Strahlung an den zusätzlichen eingebrachten Materialien der Oberflächen. In sie lassen sich andere, mit niederem Energieaufwand ionisierende Substanzen mit bedarfsweise variierender Dichte, z.B. C, $MoS_2$, Ba, BaO, $BaO_2$, Ca, CaO, Si, $SiO_2$ oder auch wieder Edelmetalle, auf- bzw. einbringen. Beispielsweise lassen sich mit Oxiden folgende Austrittsenergie erzielen: $Cs_2O$, 1,08 eV; SrO 2,0 eV; BaO 1,57 eV; CaO 2,3 eV, mit metallischen Verbindungen, wie z.B. Ni Cs 1,36 eV; Ce $B_6$ 2,56 eV; $CaB_6$ 2,8 eV.

Gegenüber reinen Metallen führt dies zu erheblich verbesserten Ladungsträgerdichten im Gasraum. Vergleich reine Metall: z.B. Austrittsenergie Ni - 4,9 eV; W - 4,6 eV.

Durch Ausnutzung der niederen Elektronenaustrittsenergien kombiniert mit angepaßten Emissionsspektren ist eine weitere Steigerung der Ladungsträgerdichten erzielbar.

Als Verbundwerkstoff kann z.B. ein mit Ni getränktes W- oder Mo-Gerüst verwendet werden. Auch Verbundwerkstoffe aus $Al_2O_3$ oder $SiO_2$, jeweils mit Ni oder auch anderen Metallen in Trockensinterung hergestellt, sind denkbar. Ganz allgemein lassen sich Me-Oxide, z.B. $Al_2O_3$, Me-Nitride, z.B. ALN, Me-Boride, z.B. $CrB_2$, oder auch Ni- beschichtete und zu einem Verbundwerkstoff gesinterte C-Fasern verwenden.

Weitere Trägermaterialien sind Ni mit BaO oder $SiO_2$ gesputtert sowie Ti, das durch CVD mit $TiO_2$ beschichtet ist.

Bei Fig. 2a ist in die Auflagefläche einer im Querschnitt gezeichneten Elektrode 5 die Abszisse und symmetrisch zum Querschnitt die Ordinate eines Koordinatenkreuzes eingezeichnet. Auf diese Weise symbolisiert die Abszisse den Abstand von der geometrischen Elektrodenmitte und die Ordinate die Konzentration einer Dotierung. Unter diesen Annahmen zeigen die Fig. 2b und 2c jeweils eine Entladung über dem Mittelbezirk der Elektrode 5, wobei die Intensität im Fall der Fig. 2b gleichbleibend und im Fall der Fig. 2c variabel verläuft.

Fig. 3a zeigt sodann die Charakteristik der Emission einer Elektrode, einer Wand oder einer sonstigen zusätzlichen Einrichtung, Fig. 3b die Absorption z.B. von $O_2$ oder $H_2O$ und Fig. 3c die Absorption von niederionisierenden Molekülen - jeweils über die Wellenlänge $\lambda$ gezeichnet. Hierzu wird das Emissionsspektrum (sowohl bei Elektrode und Wand) dem Absorptionsspektrum der Gasmischung angepaßt, gleichzeitig aber - evtl. durch optische Filter unterstützt - eine Vermeidung von Strahlungsverlusten an den übrigen Beimischungen der Oberflächen angestrebt. Diese Optimierung ist relativ komplex, da sich bei verschiedenen Gasmischungen sehr verschiedene Spektren ergeben und daher eine Anpassung durch lange Versuchsreihen erfolgen muß.

Im Falle einer elektrischen Gasentladung ist neben einer effektiven Ladungsträgerproduktion an den Elektroden eine möglichst räumlich und zeitlich homogene, hohe Leitfähigkeit im Gas erwünscht. Dazu tragen Teilchen und Photonen bei, die im Bereich der Entladung oder in Bezirken nahe der Entladung erzeugt werden. Hierbei kann die Erzeugung durch die Entladung selbst oder durch zusätzliche Einrichtungen, etwa zwischen Spitzen, Kanten, Oberflächen (als Korona-, Glimm- oder RF-Entladung), erfolgen. Da eine Entladung eine große Abhänigkeit von der Gaszusammensetzung, dem Gasdruck, der Dimension und Art der Entladungskammer hat, ist für eine hinreichend gute Funktion eine Optimierung (Anpassung) der Emissions- und Absorptionsspektren der Gase bzw. einzelner Gaskomponenten und der Oberflächen der Elektroden und Wände bzw. der zusätzlich zur Ionisierung benutzten Einrichtungen notwendig. Z.B. ist es vorteilhaft, für die Ionisierung Moleküle zu verwenden, deren in Fig. 3a dargestelltes Maximum des Absorptionsspektrums nicht mit dem Spektrum störender Beimischungen, wie z.B. $O_2$ oder $H_2O$ gemäß Fig. 2b, zusammenfällt. Damit kann man erreichen, daß relativ wenige Photonen bei unerwünschten Wechselwirkungen (z.B. Stößen, Dissoziationen) verloren gehen. Lage und Verlauf des Emissions-

0 270 876

spektrums der bei der Entladung an Elektroden, Wänden oder Ionisationshilfen werden den Absorptionsspektren der Gase angepaßt, womit
eine effektive Elektronen- und Ionenproduktion und damit auch Leitfähigkeit erzielt wird.

Patentansprüche

1. Oberflächen für elektrische Entladungen innerhalb von Gasen, die
g e k e n n z e i c h n e t  sind durch

a) die Kombination von mindestens zwei sich durch ihre im Bereich von
0,1 - 100 μ gelegene Mikrostruktur (1), die Elektronenaustrittsarbeit, die Sputterrate sowie das Emissions- und Absorptionsspektrum unterscheidende Materialien (2, 3 und 4),

b) die wahlweise Verwendung von Metallen, Metallverbindungen, Kohlenstoff und Kunststoff oder eine Kombination dieser Materialien und

c) eine die elektrische Feldemission erhöhende geometrische Form.

2. Oberflächen nach Anspruch 1, d a d u r c h  g e k e n n z e i c h n e t , daß
mindestens zwei Materialien (2, 3 und 4) mit unterschiedlichen Elektronenaustrittsarbeiten so kombiniert werden, daß das Emissionsspektrum des einen Materials dem Absorptionsspektrum des anderen
Materials und/oder bei Gasentladungen dem Absorptionsspektrum des
Gases oder einzelner seiner Komponenten angepaßt ist (Fig. 3).

3. Oberflächen nach einem der vorausgehenden Ansprüche, d a d u r c h
g e k e n n z e i c h n e t , daß sie eine weitgehend homogene elektrische und thermische Leitfähigkeit in ihrer Makrostruktur aufweisen.

4. Oberflächen nach Anspruch 1, d a d u r c h  g e k e n n z e i c h n e t ,
daß die die elektrische Feldemission erhöhende geometrische Form
in der Mikrostruktur durch kleine Krümmungsradien an Spitzen,
Kanten, Kanälen, Faltungen, Poren, Kratern, Kegeln jeweils für
sich oder aus einer Kombination dieser Möglichkeiten realisiert
ist.

5. Oberflächen nach Anspruch 4, d a d u r c h  g e k e n n z e i c h n e t ,
daß niederionisierbare Substanzen mit örtlich variierender Dichte
eingefügt sind (Fig. 2).

6. Oberflächen nach einem der vorausgehenden Ansprüche, d a d u r c h g e k e n n z e i c h n e t , daß die Materialien (2, 3 und 4) aus Verbundwerkstoffen bestehen, z.B. auf pulvermetallurgischem Wege hergestellten Materialien, faserverstärkten Kunststoffen oder Röhren bzw. Faserverbundwerkstoffen.

7. Oberflächen nach einem der vorausgehenden Ansprüche, d a d u r c h g e k e n n z e i c h n e t , daß die niederionisierbaren Substanzen aus einer einzigen Substanz oder einer Verbindung der Substanzen bestehen.

8. Oberflächen nach Anspruch 7, d a d u r c h g e k e n n z e i c h n e t , daß sich die Verbindung aus zwei oder mehreren der Substanzen C, Mo, Ba, BaO, $BaO_2$, Ca, CaO, Si, $SiO_2$, $TiO_2$, Bariumtitanat, Faserverbundwerkstoffen wie z.B. Ni-beschichteten C-Fasern, zusammensetzt.

9. Oberflächen nach einem der vorausgehenden Ansprüche, die gekennzeichnet sind durch die Herstellung durch PVD-Beschichtung, Ionenplattieren, Ionenimplantieren, CVD-Beschichtung, LCVD-Beschichtung oder die Kombination zweier oder mehrerer dieser Möglichkeiten.

10. Oberflächen nach einem der vorausgehenden Ansprüche, d a d u r c h g e k e n n z e i c h n e t , daß in ihre Materialien (2, 3 und 4) als Speicher von außen eingebrachte Moleküle oder Moleküle des Gasraumes mit niederer Ionisierungsenergie und/oder mit an die Entladung angepaßten Spektren eingelagert sind (Fig. 3).

11. Verfahren zur Durchführung des Einlagerungsvorganges von Molekülen nach Anspruch 10, d a d u r c h g e k e n n z e i c h n e t , daß die Gitterabstände der Materialien (2, 3 und 4) unter Wärmeeinwirkung geweitet, die Moleküle in die Zwischengitterplätze - gegebenenfalls unter Druckeinwirkung - eindiffundiert und anschließend das Material durch Abkühlung wieder in seinen ursprünglichen, die Moleküle jetzt fest umfassenden Zustand zurückgeführt wird.

Fig. 1

Fig. 2a — Konzentration der Dotierung

5

Fig. 2b — Abstand v. geom. - Elektrodenmitte

Fig. 2c

Fig. 3a — EMISSION der Elektroden, oder Wände, oder der zusätzl. Einrichtung

$\lambda_0$ — $\lambda$

Fig. 3b — ABSORPTION z.B. des $O_2$ oder $H_2O$

$\lambda_0$ — $\lambda$

Fig. 3c — ABSORPTION der niederionisier. Molekülen

$\lambda_0$ — $\lambda$

0 270 876